# FASCICULE DE BREVET EUROPEEN

(11) **EP 2 257 446 B1**
(45) Date de publication et mention de la délivrance du brevet: **18.07.2012**
(21) Numéro de dépôt: 09722470.3
(22) Date de dépôt: 26.02.2009
(51) Int. Cl.: B60R 9/045, B60R 9/048, B60R 9/055

(54) **DISPOSITIF DE FIXATION D 'ACCESSOIRES SUR DES BARRES, ET APPLICATION AUX BARRES DE TOIT DE VEHICULES AUTOMOBILES**
VORRICHTUNG ZUR ANBRINGUNG VON ZUBEHÖRTEILEN AN STANGEN UND IHRE ANWENDUNG BEI DACHSCHIENENSTANGEN VON FAHRZEUGEN
DEVICE FOR ATTACHING ACCESSORIES TO BARS, APPLICATION TO MOTOR VEHICLE ROOF RAIL BARS

(30) Priorité: 29.02.2008 FR 0801125
(43) Date de publication de la demande: 08.12.2010
(73) Titulaire: Brochier, Patrice Jean-Marie Alain, 30340 Saint Privat des Vieux (FR); Soteau, Christian Aimé Charles, 91270 Vigneux sur Seine (FR)
(72) Inventeur: Brochier, Patrice Jean-Marie Alain, 30340 Saint Privat des Vieux (FR); Soteau, Christian Aimé Charles, 91270 Vigneux sur Seine (FR)
(86) Numéro de dépôt international: PCT/FR2009/000213
(87) Numéro de publication internationale: WO 2009/115699

(56) Documents cités:
- EP-A- 0 503 305
- WO-A-94/21490
- US-A- 5 758 810

## Description

L'invention concerne un dispositif qui permet de fixer un accessoire sur une ou plusieurs barres et son application dans un dispositif de fixation sur barres de toit permettant de fixer un accessoire de portage pour véhicule automobile tel que coffre de toit, tente de toit, galerie ou autre, sur les barres de toit dudit véhicule qu'elles soient transversales ou longitudinales.

Il existe actuellement différents systèmes pour fixer, sur les barres de toit de véhicules, un accessoire de portage tel qu'un coffre de toit, une tente de toit pour automobiles ou une galerie.

Pour fixer un accessoire du type coffre de toit, il existe des systèmes rapides et antivol tels que le brevet FR2836432, accessibles uniquement par l'intérieur du coffre de toit. Cependant l'accès impose que l'utilisateur puisse atteindre le système qui est en hauteur sur le véhicule et de surcroit à l'intérieur du coffre, ce qui est difficile dans le cas de véhicules haut. De plus, le système encombre l'intérieur du coffre, gérant le chargement, et dans le cas d'une tente de toit, où le plancher doit être absolument plat pour pouvoir recevoir le couchage, il n'est pas possible d'utiliser ce système. Enfin, le système est limité quant à la largeur des barres sur lesquelles il sera fixé, ce qui actuellement peut poser problèmes avec certaines barres en forme d'aile, très large.

Il existe d'autres systèmes, utilisés notamment pour fixer des barres transversales sur des barres longitudinales, tels que EP0894672, mais qui sont difficilement transposables à utilisation dans le cas de coffres de toit ou galerie sur barres transversales, car l'accès serait difficile puisque entre le pavillon du véhicule et le coffre ou la galerie. De plus, ces systèmes n'ont pas une plage d'utilisation suffisante pour serrer aussi bien des barres fines que très larges. Enfin, ces systèmes comprennent un grand nombre de pièces, qui ont un impact sur le coût de fabrication.

Un autre système de ce type est celui décrit dans le brevet WO 94/21490 qui sert de base pour la présentation en deux parties de la revendication 1 et qui utilise un système de coin pour le serrage à toutes les positions. Dans ce dispositif connu, une vis dans l'axe du canal de la barre (ou rail) serre deux mâchoires identiques. La face externe des mâchoires est inclinée à environ 60° et comporte un alésage pour la vis à six pans creux. Un coin a 60° est taraudé pour recevoir la vis et sert d'écrou au système. Un ressort de compression entre les mâchoires permet de précontraindre le système de blocage avec une force faible qui permet de déplacer le système en appuyant sur le coin.

Ce système comporte quelques inconvénients tels que l'effet de coin qui est fonction de la vis de serrage et de la pente du coin : il y a une contradiction entre l'effort de serrage des mâchoires et l'effort de blocage des coins. Selon la pente du coin, l'un des deux efforts augmentera et l'autre diminuera, alors que les deux sont aussi important l'un que l'autre. Par ailleurs, si la vis casse, il n'y a plus de fonction d'attache, ce qui peut être dangereux pour la sécurité du chargement. Enfin, la vis est guidée par le filetage qui se déplace avec l'effet de coin radialement et elle est déjà guidée par sa tête qui est dans l'alésage de l'autre mâchoire, donc double guidage exposant la vis à des contraintes mécaniques supplémentaires, ce qu'il faut éviter (risque de rupture).

Il existe aussi les systèmes très classiques de fixations par brides (de formes variées) dont la manipulation est peu aisée car il faut visser les écrous (ou les vis) à l'endroit où le chargement repose sur la barre, en général entre le pavillon du véhicule et le chargement, endroits peu accessibles et avec peu de place pour les manipulations nécessaires. De plus la hauteur des barres par rapport au pavillon étant fort variable d'un véhicule à l'autre, il n'est pas rare que des vis soient trop près du pavillon voire le touchent et rendent le système inutilisable. Enfin, ces systèmes ne sont pas antivols.

Le but de la présente invention permet de remédier à ces inconvénients en ce sens que le dispositif, comportant un ensemble pince circulant dans un rail, se déplace aisément à l'endroit nécessaire (suivant l'écartement des barres de toit), enserre les barres de toutes largeurs, s'auto-centre et s'auto-bloque des deux cotés de la barre en la serrant fortement sans que cela ne demande d'effort important de la part de l'utilisateur, reste bloqué en cas de rupture de la tige de commande, se manipule de l'extérieur (n'encombre pas l'intérieur d'un coffre de toit ou le plancher d'une tente de toit), est antivol, est facile d'accès, est facile à desserrer, comporte peu de pièces, simples et peu coûteuses à produire.

Le dispositif s'appuie sur l'effet de coincement et l'effet d'arc-boutement connu en mécanique pour bloquer un corps circulant dans une glissière.

Considérons les éléments suivants :
- Deux corps circulant librement dans le rail sont appelés corps de guidage, et sont équipés chacun d'une partie sortant du rail, qui sera utilisé comme un mors,
- Le coefficient de frottement à sec entre le rail et le corps de guidage est égal ou supérieur à 0,25 ce qui correspond aux surfaces métalliques brutes sèches de ces pièces
- Le double de la longueur du corps de guidage est au moins égale ou inférieure à la demi-hauteur du rail ajoutée à la distance entre le rail et le point de contact de la barre avec le mors
- ces corps de guidages sont alésés en leur centre
- une noix de guidage est installée dans chacun de ces alésages
- ces noix sont taraudées l'une à droite l'autre à gauche
- une tige de commande filetée d'un coté à droite se visse dans la noix taraudée à droite et de l'autre coté à gauche et se visse dans la noix taraudée à gauche
- cette tige sert donc à mouvoir en translation les corps de guidage en les éloignant ou les rapprochant l'un de l'autre selon le sens dans laquelle on la visse
- l'ensemble de ces pièces est solidaire et forme une pince circulant librement dans le rail

On obtient alors un résultat surprenant si l'on place une barre entre les deux mors de la pince et que l'on visse la tige de commande de telle sorte que les mors de la pince se rapprochent :
- lorsqu'un des deux mors touche la barre et que l'on continue à visser l'autre mors se rapproche à son tour, auto-centrant ainsi la pince sur la barre jusqu'au contact des deux mors sur la barre
- en continuant à visser, la mise en butée du mors contre la barre conduit à la rotation du corps de guidage et à son coincement par effet de coin dans le rail, provoquant la solidarisation du rail avec la barre, solidarisation de tous les degrés de liberté permettant de transmettre des couples et des efforts compatibles avec l'usage envisagé dans toutes les directions
- De plus du fait des dimensions du corps de guidage par rapport au rail et au point de contact du mors avec la barre le corps de guidage est bloqué par arc-boutement, et donc même si la tige de commande venait à se rompre, les corps de guidages resteraient bloqué et donc la pince maintiendrait toujours la barre
- Il suffit de tourner la tige de commande en sens inverse pour débloquer un des deux corps de guidage et donc ouvrir la pince et libérer la barre. Sinon la pince ne s'ouvre pas et les corps de guidage restent bloqués, enserrant la barre.
- Les efforts de serrage sont démultipliés de telle sorte qu'en vissant la tige de commande les efforts reportés sur les corps de guidages lors de leur coincement sont beaucoup plus importants

Ainsi en utilisant ce dispositif, on peut fixer un accessoire sur une ou plusieurs barres en l'équipant d'un dispositif composé des éléments décrits ci-dessus.

L'invention sera mieux comprise à la lecture de la description qui suit et à l'examen des figures qui l'accompagnent. Celles-ci sont présentées à titre indicatif et nullement limitatif de l'invention.

### Les dessins annexés en quatre planches illustrent l'invention :

La figure 1 représente les éléments du sous-ensemble pince de la présente invention

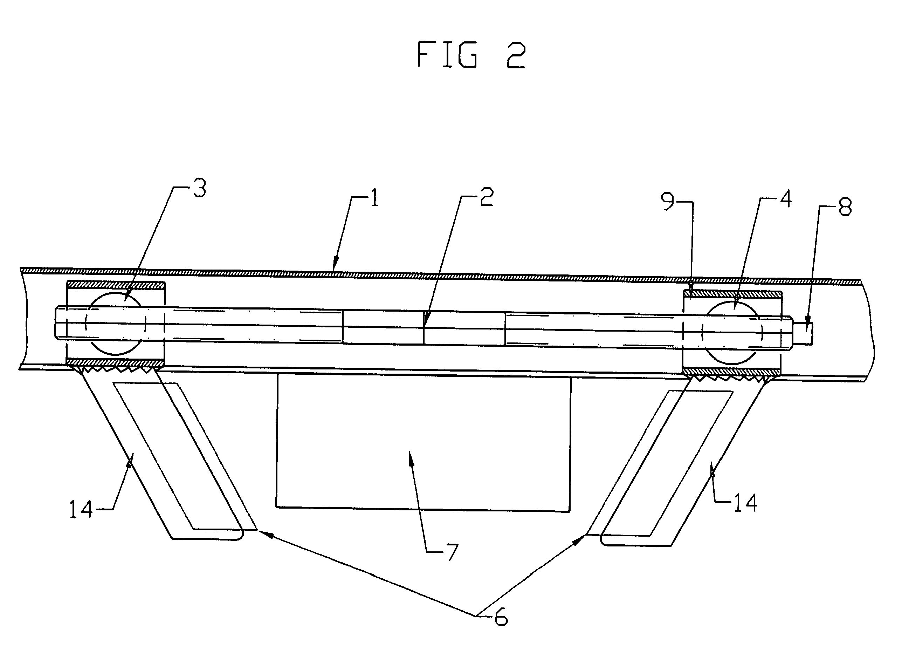

La figure 2 représente le sous ensemble pince de la présente invention dans un rail 1
La figure 3 représente le sous-ensemble pince en position serrée sur la barre de toit 7, les corps de guidage 9 étant alors arcboutés dans le rail 1,
La figure 4 représente la section A de la figure 3

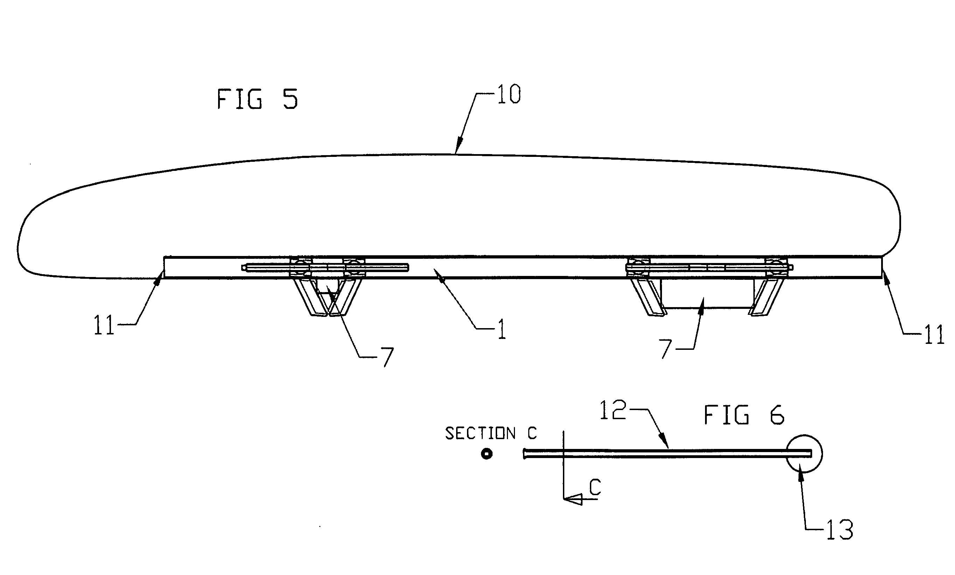

La figure 5 représente une vue d'ensemble d'un coffre de toit équipé du système et de deux barres de toit 7
La figure 6 représente l'outil spécifique de montage/démontage 12

Une application à un dispositif de fixation d'accessoire sur des barres de toits de véhicule est ici décrite.

Ce dispositif est mis en oeuvre pour la fixation rapide, simple, et sûre d'accessoires de portage pour véhicule automobile tels que coffre de toit 10, tente de toit, portes-vélos, galerie ou autre, sur les barres de toits de véhicules.

Le dispositif de fixation d'accessoires sur des barres de toits de véhicule est constitué d'un rail 1 en forme de C, ou tube ouvert, et d'une ou plusieurs mâchoires 5 comportant une partie corps de guidage 9 circulant dans le rail 1 et une partie mors 14 extérieure au rail 1 et est caractérisé en ce que le corps de guidage 9 étant alésé en son centre et y recevant une rotule ou une noix taraudée 3 s'articulant dans cet alésage et mue en translation par une tige de commande filetée 2, la mise en butée du mors 14 contre la barre 7 lors de cette translation conduit à la rotation du corps de guidage 9 et à son coincement dans le rail 1.

Le coefficient de frottement à sec entre le rail et le corps de guidage étant égal ou supérieur à 0,25, ce qui correspond aux surfaces métalliques brutes sèches de ces pièces, le double de la longueur du corps de guidage 9 est au moins égale ou inférieure à la demi-hauteur du rail 1 ajoutée à la distance entre le rail 1 et le point de contact de la barre 7 avec le mors 14 afin de réaliser les conditions d'arc-boutement des corps de guidage 9 dans le rail 1.

L'arc-boutement des corps de guidage 9 dans le rail 1 permet aux mâchoires 5 de rester bloquées en cas de rupture de la tige de commande 2, assurant ainsi la sécurité de l'arrimage du chargement sur les barres de toit 7.

Deux mâchoires 5, disposées de façon symétriques dans le rail 1 et reliées par la tige de commande 2 dont une partie filetée à droite se visse dans la noix taraudée à droite 3 d'une mâchoire et l'autre partie filetée à gauche se visse dans la noix taraudée à gauche 4 de l'autre mâchoire, forment un ensemble pince, les mâchoires 5 se rapprochant l'une vers l'autre le long de la tige de commande 2 lorsque celle-ci est tournée dans un sens (à droite par exemple) provoquant l'auto centrage par contact successif des deux mors 14 contre la barre de toit et enfin le serrage de ces mors 14 sur la barre 7 lorsqu'ils sont tous les deux arrivés en contact avec cette barre 7 provoquant la solidarisation du rail 1 avec la barre de toit par coincement des corps de guidage 9 dans le rail 1 , ces corps de guidage 9 ne pouvant se décoincer et l'ensemble pince s'ouvrir que si la tige de commande 2 est tournée dans l'autre sens.

Cette solidarisation de tous les degrés de liberté permet de transmettre des efforts compatibles avec l'usage envisagé dans toutes les directions et des couples dans toutes les directions. Le déplacement des noix taraudées 3 et 4 s'éloignant l'une de l'autre le long de la tige de commande 2 lorsque celle-ci est tournée à gauche entrainant le déplacement des corps de guidage 9 provoquant ainsi le déverrouillage des mâchoires 5 dans le rail 1 par désactivation de l'arc-boutement, et l'éloignement des mors 14 opposés.

Les mors 14 des mâchoires 5 sont recouverts d'un matériau élastique 6 dont la compression permet d'assurer un effort constant sur les corps de guidages 9 et donc de maintenir l'arc-boutement, en cas de fortes vibrations par exemple.

Le rail en C 1 possède une ouverture permettant de sortir ou insérer un ou plusieurs ensembles pince sans outillage.

Ce rail en C 1 est ouvert sur toute sa longueur afin que les ensembles pinces se positionnent à tous les écartements de barres de toit, qui varient d'un véhicule à l'autre.

Les parties filetées de la tige de commande 2 sont d'une longueur supérieure à 50 mm afin de s'adapter à toutes les largeurs barres de toits de véhicules, aussi bien les barres carrées ou rectangulaires classiques que les barres profilées aérodynamiques en forme d'ailes d'avions, plus larges que la moyenne, et pouvant de ce fait poser problèmes pour les autres systèmes de fixation.

Les ensembles pinces sont facilement interchangeables sans outils, en faisant glisser à la main l'ensemble pince jusqu'à l'ouverture du rail 1, qui peut être découpée dans les ailes du rail 1 en C n'importe où sur le rail 1, ou se trouver au bout 11 du rail 1.

### Une façon de réaliser l'invention peut être la suivante :

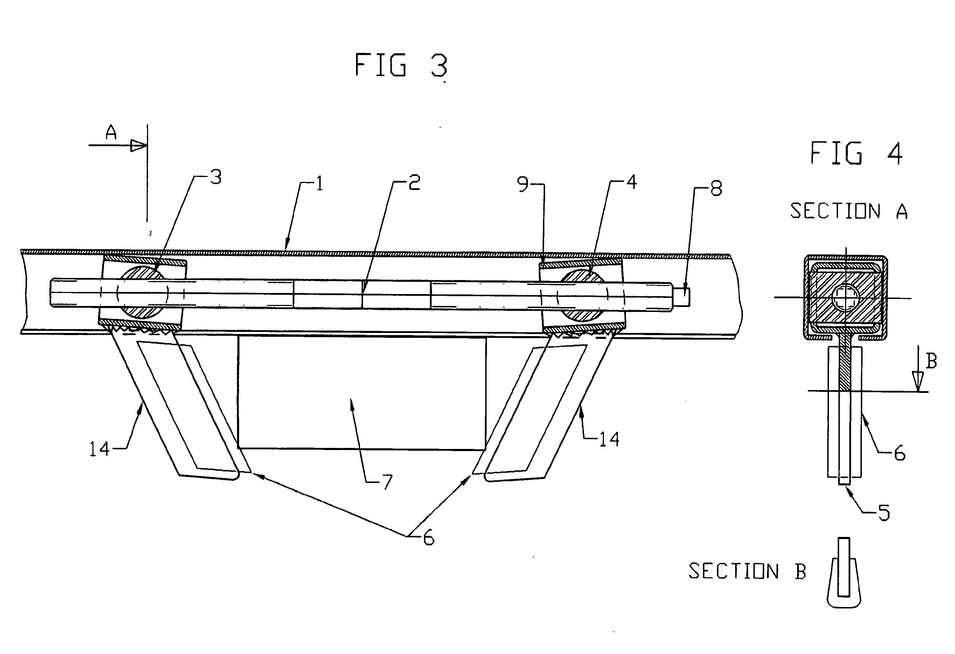

Deux rails 1 sont fixés sur un coffre de toit 10. Ils sont en forme de C (FIG 4).

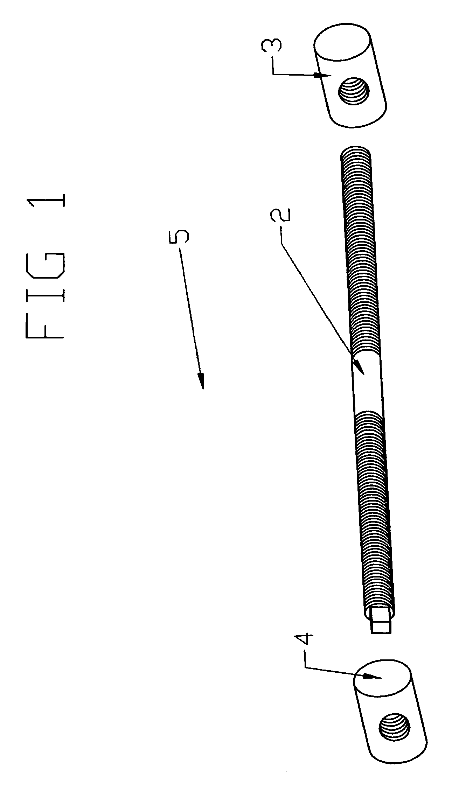

Huit mâchoires 5 identiques comportant chacune une partie mors 14 et une partie corps de guidage 9 sont réalisées selon les FIG 1, 3 et 4, elles peuvent être mécano-soudées ou moulées. La longueur du corps de guidage 9 est fonction de la dimension de sa section (exemple : 30 pour une section carrée de 25). Un chaussant en matériau élastique 6 peut être monté sur le mors 14.

Huit noix cylindriques sont réalisées identiques sauf le taraudage qui pour quatre noix 3 est à droite et pour quatre noix 4 est à gauche.

Quatre tiges de commande 2 sont réalisées avec une partie filetée à droite et une partie filetée à gauche, sur cette dernière un carré 8 de commande est usiné.

Un outil spécifique 12 est fabriqué à partir d'un tube carré avec une forme d'avaloir pour améliorer le centrage de l'outil. Coté commande, on peut mettre une sphère 13 en plastique moleté moulée avec une empreinte carrée.

Pour résumer le fonctionnement de cette réalisation:

Les ensembles pinces circulent librement dans les rails 1. Quand on tourne la tige de commande 2 à droite la pince se ferme, à gauche elle s'ouvre. Les pinces s'auto centrent et se serrent sur les barres de toit 7 à la position de celles-ci en fixant le rail 1 en C sur la barre de toit 7. Les ensembles pinces sont très facilement interchangeables sans outils, peu cher à fabriquer, car l'ensemble comporte peu de pièces.

La commande des pinces de serrage se fait en bout 11 des rails 1 en C, l'utilisateur peut les serrer ou les desserrer à l'aide de l'outil spécifique 12 commandant la tige de commande 2. Il faut donc pour ouvrir ou fermer les mâchoires 5 des pinces l'outil spécifique 12 de la dimension du carré de commande 8 de la tige de commande 2, sans cet outil, cette ouverture est impossible. De plus, si l'un des bouts du rail 1 est sécurisé, comme ce peut être le cas pour une tente de toit ou un coffre de toit, le système est doublement antivol.

Pour le montage l'utilisateur pré-positionne à la main l'ensemble pince en disposant la barre de toit 7 entre les deux mâchoires 5 ouvertes des pinces. A l'aide de l'outil spécifique 12 il visse la tige de commande 2 , une des mâchoires 5 va se mettre en appui sur la barre de toit, et la mâchoire 5 opposée va se déplacer et fermer le système en serrant fortement la barre de toit 7. Les corps de guidage 9 se bloquent dans le rail 1 par effet de tiroir.

Pour le démontage, l'utilisateur dévisse la tige de commande 2 avec l'outil spécifique 12 et les mâchoires 5 se libèrent de l'arc-boutement, puisque repoussées par les noix taraudées 3 et 4 dans l'axe du rail.

## Revendications

1. Dispositif de fixation sur barres constitué d'un rail (1) en forme de C, ou tube ouvert, et d'une ou plusieurs mâchoires (5) comportant une partie corps de guidage (9) circulant dans le rail (1) et une partie mors (14) extérieure au rail (1) **caractérisé en ce que**
le corps de guidage (9) étant alésé en son centre et y recevant une noix taraudée (3) s'articulant dans cet alésage et mue en translation par une tige de commande filetée (2), la mise en butée du mors (14) contre la barre (7) lors de cette translation conduit à la rotation du corps de guidage (9) et à son coincement dans le rail (1).

2. Dispositif de fixation selon la revendications 1 **caractérisé en ce que** deux mâchoires (5), disposées de façon symétriques dans le rail (1) et reliées par la tige de commande (2) dont une partie filetée à droite se visse dans la noix taraudée à droite (3) d'une mâchoire et l'autre partie filetée à gauche se visse dans la noix taraudée à gauche (4) de l'autre mâchoire,
forment un ensemble pince, les mâchoires (5) se rapprochant l'une vers l'autre le long de la tige de commande (2) lorsque celle-ci est tournée dans un sens
provoquant l'auto centrage par contact successif des deux mors (14) contre la barre de toit et enfin le serrage de ces mors(14) sur la barre (7) lorsqu'ils sont tous les deux arrivés en contact avec cette barre (7)
provoquant la solidarisation du rail (1) avec la barre de toit par coincement des corps de guidage (9) dans le rail (1)
ces corps de guidage (9) ne pouvant se décoincer et l'ensemble pince s'ouvrir que si la tige de commande (2) est tournée dans l'autre sens.

3. Dispositif de fixation selon la revendication 1 ou la revendication 2 **caractérisé en ce que** le coefficient de frottement à sec entre le rail et le corps de guidage étant égal ou supérieur à 0,25, le double de la longueur du corps de guidage (9) est inférieure ou égale à la demi-hauteur du rail (1) ajoutée à la distance entre le rail (1) et le point de contact de la barre (7) avec le mors (14) afin de réaliser les conditions d'arc-boutement des corps de guidage (9) dans le rail (1).

4. Dispositif de fixation selon la revendication 3 **caractérisé en ce que** l'arc-boutement des corps de guidage (9) dans le rail (1) permet aux mâchoires (5) de rester bloquées en cas de rupture de la tige de commande(2).

5. Dispositif de fixation selon l'une quelconque des revendications 1 à 4 **caractérisé en ce que** les mors (14) des mâchoires (5) sont recouvert d'un matériau élastique (6) dont la compression permet d'assurer un effort constant sur les corps de guidages (9) et donc de maintenir l'arc-boutement.

6. Dispositif de fixation selon l'une quelconque des revendications 1 à 5 **caractérisé en ce que** le rail (1) possède une ouverture permettant de sortir ou insérer un ou plusieurs ensembles pince sans outillage.

7. Dispositif de fixation selon l'une quelconque des revendications 1 à 6 **caractérisé en ce que** le rail en C (1) est ouvert sur toute sa longueur afin que les ensembles pinces se positionnent à tous les écartements de barres.

8. Dispositif de fixation selon l'une quelconque des revendications 1 à 7 **caractérisé en ce qu'**il est mis en oeuvre pour la fixation rapide, simple, et sûre d'accessoires de portage pour véhicule automobile tels que coffre de toit (10), tente de toit, portes-vélos, galerie ou autre, sur les barres de toits de véhicules.

9. Dispositif de fixation selon l'une quelconque des revendications 1 à 8 **caractérisé en ce que** les parties filetées de la tige de commande (2) sont d'une longueur supérieure à 50 mm afin de s'adapter à toutes les largeurs de barres de toits de véhicules.

## Claims

1. Device for attaching accessories to vehicle roof bars, comprising a C-shaped rail (1) or open tube, and one or more grips (5), including a guide body (9) which moves along the rail (1) and a jaw (14) external to the rail (1), **characterized**
**by** the guide body (9) being bored in its center to receive a ball or a threaded nut (3) which articulates in the bore and is driven in translation by a threaded control rod (2), the locking of the jaws (14) against the bar (7) in this translation leads to rotation of the guide body (9) and its wedging in the rail (1).

2. Fastening device as per claim 1, **characterized by** two grips (5), arranged symmetrically in the rail (1) and connected by the control rod (2), which is threaded on one end to the right to screw into the grip's nut threaded to the right (3) and on the other threaded to the left to screw into the other grip's left threaded nut (4),
forming a clamp, with the grips (5) closing together along the control rod (2) when it is rotated in one direction,
causing self-centering as a result of the successive contact of the two grips (14) against the roof bar (7)
and finally the tightening of the jaws (14) on the bar 7 when both come into contact with the bar (7)
thereby fastening the rail (1) to the roof bar through wedging of the guide bodies (9) in the rail (1)
making it impossible for these guide bodies (9) to be released and the entire clamp to open unless the control rod (2) is rotated in the opposite direction

3. Fastening device as per claim 1, **characterized by** the fact that the dry friction coefficient between the rail and the guide body is equal to or greater than 0.25, corresponding to these parts' raw and dry metal surfaces and that twice the length of the guide body (9) is at least equal or less than half the height of the rail (1) added to the distance between the rail (1) and the contact point of the bar (7) with the jaws (14), in order to brace the guide bodies (9) in the rail (1)

4. Fastening device as per claim 3, **characterized by** the fact that the bracing of the guide bodies (9) in the rail allows the grips (5) to remain locked in the event the control rod (2) breaks

5. Fastening device as per claims 1-4, **characterized by** the fact that the jaws (14) of the grips (5) are covered in an elastic material (6) whose compression ensures a constant force on the guide bodies (9) and thereby maintains the bracing effect

6. Fastening device as per claims 1-5, **characterized by** the fact that the rail (1) has an opening to allow insertion or removal of one or more clamp assemblies, without the need for tools

7. Fastening device as per claims 1-6, **characterized by** the fact that the rail (1) is open along its entire length so that clamp assemblies can be positioned at all gauges of roof rails, which vary from one vehicle to another

8. Fastening device as per claims 1-7, **characterized by** the fact that the device is used for the quick, easy and safe attachment of motor vehicle transportation accessories such as roof boxes (10), roof tents, bicycle racks, roof racks, etc., to vehicles' roof bars

9. Fastening device as per claims 1-8, **characterized by** the fact that the threaded portions of the control rod (2) are longer than 50mm to fit any width of roof bars

## Patentansprüche

1. Vorrichtung zur Befestigung an Stangen, bestehend aus einer Schiene (1) in C-Form als sogenanntes offene Rohr und aus einer oder mehreren Klemmbacken (5), einen Teil als in der Schiene (1) beweglichen Führungskörper (9) und einen Backenteil (14) außerhalb der Schiene (1) umfassend, **dadurch gekennzeichnet, dass**
der Führungskörper (9) in seiner Mitte ausgebohrt ist und in dieser Ausbohrung ein durch eine Schraubsteuerstange (2) translatorisch getriebenes Stück mit Innengewinde (3) gelenkig aufnimmt, wobei das Anschlagen der Backe (14) gegen die Stange (7) während der Translation zur Drehung des Führungskörpers (9) und zu dessen Arretierung in der Schiene (1) führt.

2. Befestigungsvorrichtung nach Anspruch 1, **dadurch gekennzeichnet, dass** zwei Klemmbacken (5), die in der Schiene (1) symmetrisch angeordnet und durch die Steuerstange (2) verbunden sind, deren rechts gewundener Abschnitt in das innengewundene Stück (3) rechts einer Klemmbacke verschraubt wird und deren weiterer, links gewundener Abschnitt in das innengewundene Stück (4) links der anderen Klemmbacke verschraubt wird,
eine Klemmanordnung bilden, wobei die Klemmbacken (5) sich entlang der Steuerstange (2) aufeinander zu bewegen, wenn Letztere in eine Richtung gedreht wird,
wobei beide Backen (14) durch ihre nacheinander erfolgende Berührung mit der Dachstange sich selbstzentrieren und schließlich diese Backen (14) an der Stange (7) eingespannt werden, wenn beide nun diese Stange (7) berühren,
wobei die Schiene (1) durch die Arretierung der Führungskörper (9) in der Schiene (1) mit der Dachstange verbunden wird,
wobei diese Führungskörper (9) sich nur wieder lösen und die Klemmanordnung sich nur öffnen können, wenn die Steuerstange (2) in die andere Richtung gedreht wird.

3. Befestigungsvorrichtung nach Anspruch 1 oder nach Anspruch 2, **dadurch gekennzeichnet, dass** der Beiwert für Trockenreibung zwischen der Schiene und dem Führungskörper gleich oder höher als 0,25 ist, wobei die doppelte Länge des Führungskörpers (9) kleiner als oder gleich der halben Höhe der Schiene (1) addiert zu der Entfernung zwischen der Schiene (1) und dem Berührungspunkt der Stange (7) mit der Backe (14) ist, um die Voraussetzungen für die Selbsthemmung der Führungskörper (9) in der Schiene (1) zu schaffen.

4. Befestigungsvorrichtung nach Anspruch 3, **dadurch gekennzeichnet, dass** mit der Selbsthemmung der Führungskörper (9) in der Schiene (1) die Klemmbacken (5) bei Zusammenbruch der Steuerstange (2) arretiert bleiben.

5. Befestigungsvorrichtung nach einem der Ansprüche 1 bis 4, **dadurch gekennzeichnet, dass** die Backen (14) der Klemmbacken (5) mit einem elastischen Werkstoff (6) überzogen sind, wobei dessen Kompression eine andauernde Beanspruchung auf den Führungskörpern (9) und damit verbunden die Aufrechterhaltung der Selbsthemmung ermöglicht.

6. Befestigungsvorrichtung nach einem der Ansprüche 1 bis 5, **dadurch gekennzeichnet, dass** die Schiene (1) eine Öffnung aufweist, durch welche eine oder mehrere Klemmanordnungen ohne Werkzeug herausgenommen oder angebracht werden können.

7. Befestigungsvorrichtung nach einem der Ansprüche 1 bis 6, **dadurch gekennzeichnet, dass** die C-Schiene (1) auf ihrer Gesamtlänge offen ist, damit die Klemmanordnungen in allen Stangenabständen angebracht werden können.

8. Befestigungsvorrichtung nach einem der Ansprüche 1 bis 7, **dadurch gekennzeichnet, dass** sie für die schnelle, einfache und sichere Befestigung von Tragvorrichtungen für Fahrzeuge, wie zum Beispiel Dachkoffer (10), Dachzelt, Fahrradhalter, Dachträger oder sonstiges auf den Dachschienen von Fahrzeugen eingesetzt wird.

9. Befestigungsvorrichtung nach einem der Ansprüche 1 bis 8, **dadurch gekennzeichnet, dass** die gewundenen Abschnitte der Steuerstange (2) länger als 50 mm sind, um an alle Dachschienenbreiten von Fahrzeugen angepasst werden zu können.
